# EUROPEAN PATENT SPECIFICATION

(11) **EP 3 961 350 B1**
(45) Date of publication and mention of the grant of the patent: **16.09.2026**
(21) Application number: 21184276.0
(22) Date of filing: 07.07.2021
(51) Int. Cl.: G06F 1/26, H02J 7/00, H01M 10/00, G07G 1/00

(54) **INFORMATION PROCESSING APPARATUS, MERCHANDISE SALES DATA PROCESSING APPARATUS, AND PROGRAM**
INFORMATIONSVERARBEITUNGSVORRICHTUNG, WARENVERKAUFSDATENVERARBEITUNGSVORRICHTUNG UND PROGRAMM
APPAREIL DE TRAITEMENT D'INFORMATIONS, APPAREIL DE TRAITEMENT DE DONNÉES DE VENTE DE MARCHANDISES ET PROGRAMME

(30) Priority: 25.08.2020 JP 2020141559
(43) Date of publication of application: 02.03.2022
(73) Proprietor: Toshiba TEC Kabushiki Kaisha, Tokyo 141-8562 (JP)
(72) Inventor: Kanomata, Mikihiro, Tokyo 141-8562 (JP)
(74) Representative: Bandpay & Greuter

(56) References cited:
- JP-A- 2009 278 754
- JP-A- S61 246 820
- US-A- 5 773 954
- US-A- 5 959 368
- US-A1- 2005 041 352
- US-A1- 2013 232 370
- US-A1- 2014 120 866
- US-A1- 2014 203 639
- US-A1- 2019 139 018

## Description

### FIELD

Embodiments described herein relate generally to an information processing apparatus for merchandise sales processing.

### BACKGROUND

Recently in retail stores, self-service checkout machines and semi-self-service checkout machines which operate as point-of-sale ("POS") terminals on which customers themselves may perform checkout related functions such as product registration and payment processing have been put into practical use. Furthermore, a shopping cart-mounted POS terminal ("cart POS") that enables the customer to perform registration of merchandise while moving about the store with the shopping cart has been proposed.

For example, the cart POS includes input and output devices such as a tablet terminal, a scanner, and a card reader. These input and output devices are supplied with power (DC power) from a battery provided on the cart POS. However, such battery capacity is limited, thus it may be desirable to provide a plurality of batteries on the cart POS and, such that when the remaining power of a battery supplying power becomes low, it may be promptly disconnected and another battery may be connected. In some examples, other devices, such as a camera, may be mounted on the cart POS and connected to the cart POS terminal or the like, and thus further increases in power consumption is expected.

As an apparatus with the plurality of batteries, a cart described in Literature 1 (JP-2019-526483) is known as one example.

However, in the cart described in Literature 1, switch timing of a battery is not disclosed.

US 2013232370 A1 discloses an information processing apparatus with a controller, a plurality of batteries, and a battery selector that switches which battery is connected to a component device based on battery status (output voltage). The apparatus is a POS terminal.

### BRIEF DESCRIPTION OF THE DRAWINGS

FIG. 1 is a schematic perspective view of a cart POS of a first embodiment.
FIG. 2 is a block diagram showing an example of a hardware configuration of a tablet terminal of a first embodiment.
FIGS. 3A to 3D show examples of possible connection configurations between batteries and devices.
FIG. 4 shows aspects of a method of switching connections of a battery.
FIG. 5 is a block diagram showing an example of a functional configuration of the tablet terminal.
FIG. 6 is a flowchart of a battery switching process by a tablet terminal.
FIG. 7 is a block diagram showing an example of a functional configuration of a tablet terminal of a second embodiment.
FIG. 8 is a flowchart of a battery switching process by a tablet terminal.
FIG. 9 is a schematic perspective view of a cart POS of a third embodiment.
FIG. 10 is a block diagram showing an example of a hardware configuration of a cart POS.
FIG. 11 is a block diagram showing an example of a functional configuration of a cart POS.
FIG. 12 is a flowchart of a merchandise registration process by a tablet terminal of a third embodiment.
FIG. 13 is a flowchart of a battery switching process by a battery selector of a third embodiment.

### DETAILED DESCRIPTION

A technical challenge to be solved concerns the automatic connection switching of a battery (switchover) at an appropriate time when the remaining power of a battery becomes low while power is still being supplied. As a technology solution to such a challenge an information processing apparatus, a merchandise sales data processing apparatus, and a program is described. The invention is set out in the appended claims.

In the embodiments covered by the claims, the status of the present battery is a remaining power level calculated based on an initial capacity of the present battery and cumulative power consumption. References below to determining battery status in different ways concern unclaimed examples.

### (First Embodiment)

### (Overall Configuration of a Cart POS)

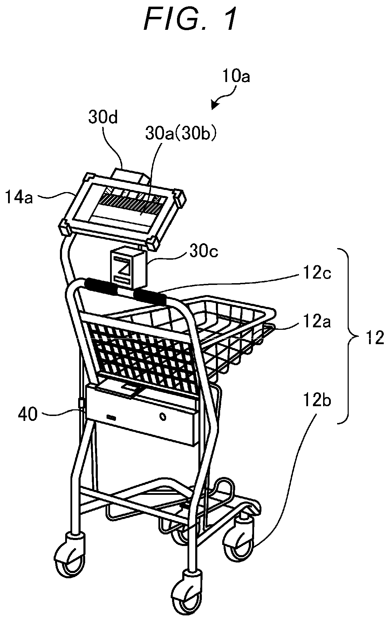

FIG. 1 is a schematic perspective view of a cart POS 10a of the first embodiment.

In the cart POS 10a, part or all of the functions of a point-of-sale (POS) terminal (also referred to in some instances as a checkout register, a sales transaction processing device, a sales register, a sales checkout machine, or the like) are provided on a shopping cart 12 in which a customer puts merchandise to be purchased while moving the shopping cart 12 around the store during shopping. The cart POS 10a includes a tablet terminal 14a, a scanner 30c, a card reader 30d, and batteries 40. The tablet terminal 14a is one example of an information processing apparatus according to an embodiment. In the present embodiment, a tablet terminal 14a providing only a registration function for the merchandise to be purchased will be explained. That is, in this example, the tablet terminal 14a does not provide settlement/payment functions, though in other examples such functions may be provided.

The shopping cart 12 includes a holder unit 12a, a caster unit 12b, and a handle unit 12c. The holder unit 12a has a basket-shaped member with an open upper surface. The holder unit 12a can be used to hold merchandise to be purchased by the customer. The caster unit 12b includes a plurality of wheels provided on the bottom surface of the shopping cart 12. The wheels permit movement back and forth and also rotate around a vertical pivot point or the like. The handle unit 12c is a member that can be gripped by the customer for moving the shopping cart 12.

The tablet terminal 14a acquires merchandise information of the merchandise to be purchased and performs a merchandise registration process. The tablet terminal 14a includes a monitor 30a of such as an LCD (Liquid Crystal Display) and a touch panel 30b stacked on the display surface of the monitor 30a. The monitor 30a is a display device that displays information output by the tablet terminal 14a. The touch panel 30b is an operation device for inputting operation information to the tablet terminal 14a by the customer.

The scanner 30c reads contents of a code symbol such as a barcode attached to the merchandise to be purchased by the customer. In the code symbol, a merchandise code for unique identification of merchandise is registered. The scanner 30c has an LED (Light Emitting Diode) that irradiates merchandise with illumination light, a light receiving device such as a CCD (Charge Coupled Device) or CMOS (Complementary Metal Oxide Semiconductor) that receives light reflected by the code symbol attached to the merchandise, and a decoder that decodes and converts the light received by the light receiving device into a digital signal (not shown) inside. Note that a reading window for outputting light from the LED and reading the code symbol is provided in one surface of the scanner 30c. When the customer places merchandise in the holder unit 12a, the customer holds the code symbol attached to the merchandise over the reading window so that the scanner 30c may read the code symbol. In place of the scanner 30c, the cart POS 10a may include a hand scanner gripped and moved close to the code symbol attached to the merchandise by the customer for reading the code symbol.

The tablet terminal 14a decodes the code symbol read by the scanner 30c and retrieves a merchandise code or the like. Then, the terminal identifies the merchandise to be purchased by the customer and registers the merchandise based on the merchandise code.

The card reader 30d scans a membership card of a store possessed by the customer and reads information including membership information etc. stored in the membership card. The read membership information can be used for provision of reward or loyalty program points according to a purchased amount of merchandise.

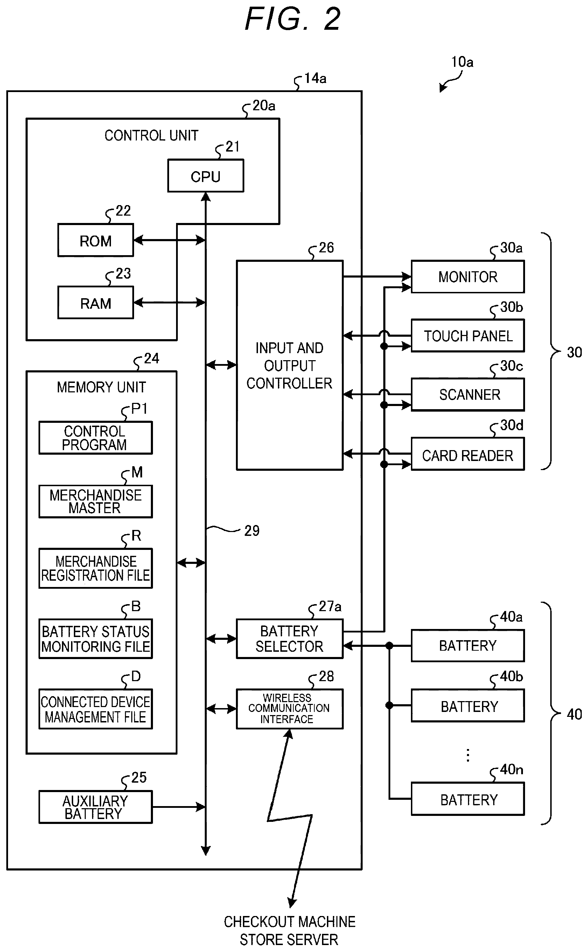

The batteries 40 (also referred to collectively as a battery unit 40) supply electric power to the tablet terminal 14a, the scanner 30c, and the card reader 30d. The batteries 40 are collectively a heavy object and thus generally will be mounted as low as possible, for example below the holder unit 12a. Reference to batteries 40 or a battery unit 40 refers to a plurality of individual batteries 40a, 40b, ... 40n (see FIG. 2). One of the individual batteries 40a, 40b, ... 40n having a sufficient power supply capability is selected, then connected to the respective parts to supply power. The batteries 40 are rechargeable batteries (secondary cell), such as a lithium ion batteries or a nickel hydride batteries.

(Hardware Configuration of Tablet Terminal) FIG. 2 is a block diagram showing an example of the hardware configuration of a tablet terminal 14a of the first embodiment.

The tablet terminal 14a includes a control unit 20a, a memory unit 24, an input and output controller 26, and a wireless communication interface 28.

In this example, control unit 20a has a configuration of a general-purpose computer including a CPU (Central Processing Unit) 21, a ROM 22, and a RAM 23. The CPU 21 reads various programs, data files, etc. stored in the ROM 22 and/or the memory unit 24 and loads the programs and/or file on the RAM 23. The CPU 21 operates according to the various programs, data files, etc. loaded in the RAM 23 and controls the entire tablet terminal 14a.

The control unit 20a, which may also be referred to as a controller, is connected to the memory unit 24, an auxiliary battery 25, the input and output (I/O) controller 26, a battery selector 27a, and the wireless communication interface 28 via an internal bus 29.

The memory unit 24 holds information even when power is turned off. The memory unit 24 is an HDD (Hard Disk Drive), for example. Or, in place of the HDD, the memory unit 24 may be a non-volatile memory storage device such as a flash memory drive or the like. The memory unit 24 stores programs including a control program P1. The control program P1 is a program which when executed implements various functions of the tablet terminal 14a.

The control program P1 may be preinstalled in the ROM 22. Alternatively, the control program P1 may be recorded in a non-transitory computer-readable recording medium such as a CD-ROM, a flexible disc (FD), a CD-R, or a DVD (Digital Versatile Disc). The control program P1 may be provided in an installable file format or an executable file format. The control program P1 may be stored on a computer or storage device connected to a network such as the Internet and downloaded and/or accessed via the network. The control program P1 may be provided or distributed via a network such as the Internet.

The memory unit 24 further stores a merchandise master M, a merchandise registration file R, a battery status monitoring file B, and a connected device management file D.

The merchandise master M is a master file in which merchandise information including names of merchandise items and unit prices corresponding to merchandise codes is stored. The merchandise master M can be updated by communications between the tablet terminal 14a and a store server or the like.

The merchandise registration file R is a file in which merchandise information registered by the customer is stored.

The battery status monitoring file B is a file in which charge statuses of the respective batteries 40a, 40b, ... 40n are stored. As charge statuses, output voltages of the respective batteries 40a, 40b, ... 40n as measured by the battery selector 27a on a regular basis can be stored. The battery status monitoring file B may store the output voltages of all of the batteries 40 including presently unconnected batteries 40 or the output voltage of only those batteries 40 presently connected and supplying power a.

The connected device management file D is a file in which a list of devices operating and being supplied with power by the battery unit 40 is stored. For example, in a case of the configuration of FIG. 2, the tablet terminal 14a, the monitor 30a, the touch panel 30b, the scanner 30c, the card reader 30d, and the battery selector 27a are registered in the connected device management file D as devices to be supplied with power by the battery unit 40. These input and output devices, (the monitor 30a, the touch panel 30b, the scanner 30c, and the card reader 30d) are some examples of devices that might be connected to the battery unit 40 or require power from the battery unit 40. Hereinafter, such connected devices may be collectively referred to as "devices 30" or individually as a "device 30" when it is unnecessary to differentiate between the various instances of the devices 30.

In the connected device management file D, power consumption of each device 30 is registered. The tablet terminal 14a selects which of the batteries 40 that will supply power to the devices 30 based on the power consumption values stored in the connected device management file D and the charge statuses values stored in the battery status monitoring file B. Specifically, in this example, the tablet terminal 14a selects a particular one of the batteries 40 to connect to the tablet terminal 14a and particular one of the batteries 40 to connect to the devices 30, but other connection patterns are possible

The auxiliary battery 25 is an extra battery that can be used to power the tablet terminal 14a and the devices 30 connected to the tablet terminal 14a when one of the batteries 40 is not connected. When one of the batteries 40 is connected to the tablet terminal 14a, the auxiliary battery 25 is continuously charged by this battery 40 to maintain its fully charged state. Then, when power is not being supplied from the battery unit 40, the auxiliary battery 25 supplies power to the tablet terminal 14a and the devices 30.

The I/O controller 26 connects the control unit 20a to the monitor 30a, the touch panel 30b, the scanner 30c, and the card reader 30d. These devices and the like may be referred to as "input and output devices" or "I/O devices".

Note that other devices or components may be connected to the tablet terminal 14a for increasing the functionality of the tablet terminal 14a. For example, an added device can be a camera, a weight sensor, or the like). Such a camera can be used to photograph (image) merchandise placed in the holder unit 12a by the customer. The tablet terminal 14a may then identify the merchandise based on a captured image. That is, the camera may be used in place of the scanner 30c. A weight sensor can be used to measure the weight of the merchandise held in the holder unit 12a. For example, the weight of the merchandise as measured by such a weight sensor may be used for preventing fraud by the customer.

As the number of connected devices increases, the power consumed from the battery 40 generally increases. Therefore, the battery 40 may require charging during regular business hours of the store. Accordingly, it may be hard to avoid switching a connection of the battery 40 during business hours.

The battery selector 27a selects the individual battery that supplies power to the tablet terminal 14a and the devices 30 connected to the tablet terminal 14a from among the plurality of individual batteries 40a, 40b, ... 40n.

In general, the battery selector 27a may have any structure that operates to change connections between a plurality of input terminals and a plurality of output terminals by operation of relays according to input of a connection control signal, for example. In some examples, the battery selector 27a may change connection between a plurality of input terminals and a plurality of output terminals using switching operations of field effect transistors (FETs), for example. Note that the battery selector 27a itself operates by power supply from the battery 40.

The wireless communication interface 28 handles wireless communications between the tablet terminal 14a and a checkout machine and a store server.

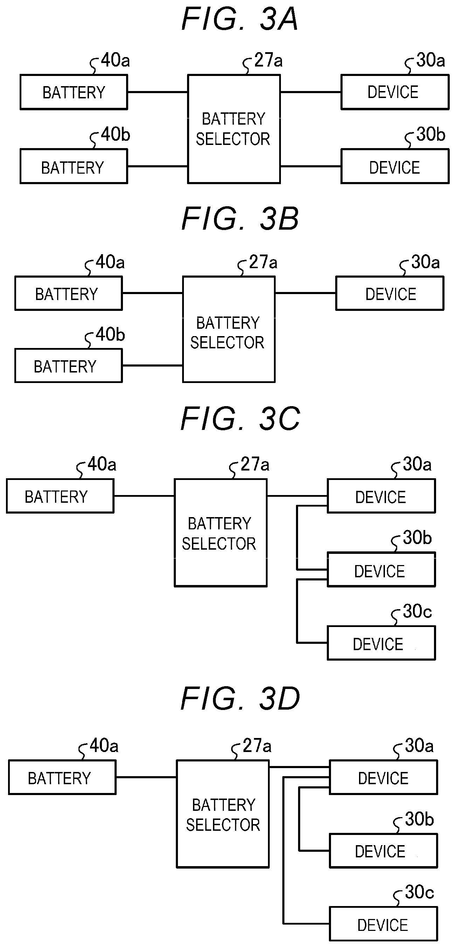

(Description of Connection Configuration of Batteries) Next, connection configurations between the batteries and the devices will be explained using FIGS. 3A to 3D. FIGS. 3A to 3D show examples of the connection configurations between the batteries and the devices.

As shown in FIG. 3A, each battery and each device may be connected on a one-to-one basis via the battery selector 27a. For example, when all devices to be connected are devices with high power consumption, the respective devices may be desirably connected to dedicated batteries. In this case, the battery selector 27a may be configured to connect the each of batteries 40a to 40n to a respective one of the plurality of devices 30 on a one-to-one basis.

As shown in FIG. 3B, a plurality of batteries may be connected to one device via the battery selector 27a. For example, when a device with high power consumption or a device needing a long operating time is used, this connection configuration (that is, multiple individual batteries connected to one device) is desirable. In this case, the battery selector 27a may be configured to connect a plurality of the individual batteries 40a - 40n to one device 30.

As shown in FIG. 3C, power can be supplied to one device, then supplied from the device to another device (and then another). For example, in FIG. 3C, when the other connected devices (30b and 30c) have lower power consumption than that of the device 30a to which power is directly supplied from the battery 40a, this connection configuration can be desirable. Power may be supplied from one device to the other device(s) using a USB (Universal Serial Bus) cable or the like. In this case, the battery selector 27a may be configured to connect one individual battery 40a to 40n to one of the devices 30 on a one-to-one basis.

As shown in FIG. 3D, by power being supplied to one device from a battery, power may be supplied from the device to other devices in parallel. For example, in FIG. 3D, the device 30a to which power is supplied from the battery 40a supplies power to the device 30b and the device 30c.

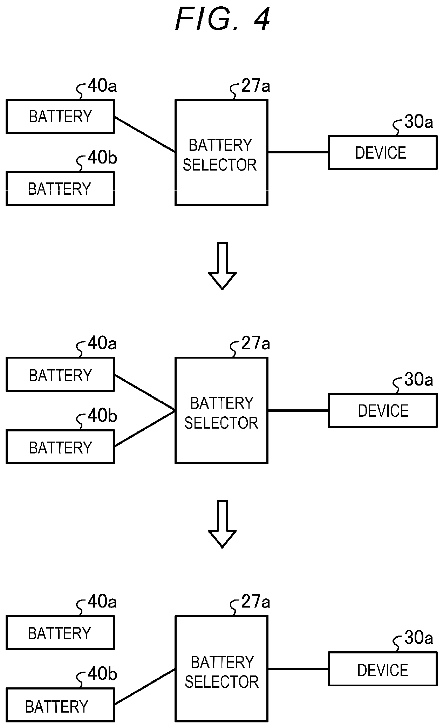

(Connection Switching Method of Battery) Next, a connection switching method for switching between a battery 40a and a battery 40b will be explained using FIG. 4. FIG. 4 depicts aspects related to a method of switching connections of a battery.

The tablet terminal 14a includes a connection switching function to avoid power disruptions between the batteries and the devices 30 when switching connections of the batteries.

For example, the connection configuration shown in the top part of FIG. 4 is set initially, that is, the battery 40a and the device 30a are connected via the battery selector 27a. The battery 40a will be subsequently disconnected and the battery 40b (which is initially not connected) will be connected.

The tablet terminal 14a controls the battery selector 27a to temporarily connect both the battery 40a and the battery 40b to the device 30a at the same time (as depicted in the middle part of FIG. 4).

Next, the tablet terminal 14a controls the battery selector 27a to disconnect the battery 40a from the device 30a (as depicted in the bottom part of FIG. 4). The battery 40b and the device 30a remain connected to each other and power supply to the device is not interrupted.

The tablet terminal 14a includes the auxiliary battery 25. Therefore, when a battery is disconnected and the device is connected to another battery, operation of the tablet terminal 14a and the device 30 connected to the tablet terminal 14a does not stop. However, the tablet terminal 14a also has the connection switching functions shown in FIG. 4, and may select and execute the connection switching system as appropriate. For example, when a device 30 having high power consumption is connected, a load is imposed on the auxiliary battery 25 during the switching of the connection of in the battery 40, and it is desirable that battery connection switching does not rely on interim power being supplied via the auxiliary battery 25.

### (Description of Functional Configuration of Tablet Terminal)

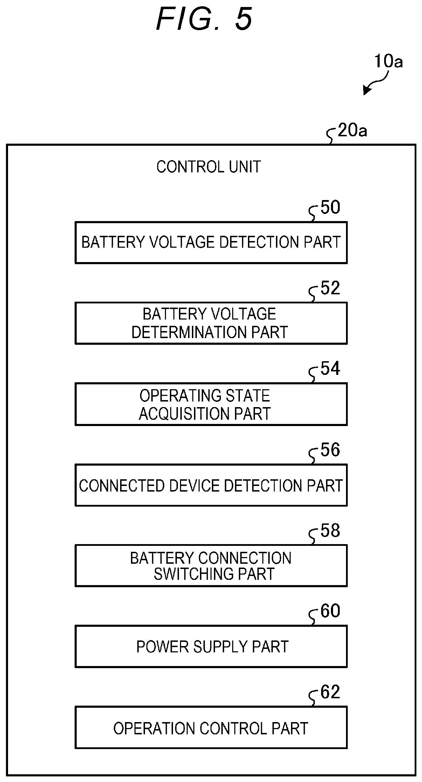

FIG. 5 is a block diagram showing an example of the functional configuration of the tablet terminal.

The control unit 20a (see FIG. 2) of the tablet terminal 14a loads and executes the control program P1 in the RAM 23, and thereby, realizes, as depicted in FIG. 5, the functions of a battery voltage detection part 50, a battery voltage determination part 52, an operating state acquisition part 54, a connected device detection part 56, a battery connection switching part 58, a power supply part 60, and an operation control part 62.

The battery voltage detection part 50 detects output voltages "e" from all individual batteries 40a to 40n that are connected to the tablet terminal 14a and the devices 30. For example, the battery voltage detection part 50 acquires the output voltages e of the individual batteries 40a to 40n as measured at the input terminal or the output terminal of the battery selector 27a.

The battery voltage determination part 52 determines whether or not the output voltages e of individual batteries 40a to 40n acquired by the battery voltage detection part 50 are equal to or less than a voltage threshold "eₜₕ". The voltage threshold eₜₕ is set to a voltage 10% lower than the output voltage e when the individual batteries 40a to 40n are fully charged.

The operating state acquisition part 54 acquires the operating state of the tablet terminal 14a. For example, the operating state acquisition part 54 detects whether the tablet terminal 14a is in a standby state. In this context, a standby state refers to a state in which the tablet terminal 14a and all devices 30 connected to the tablet terminal 14a are not presently operating. For example, of the cart POS 10a may be in a standby state while waiting in a cart storage area of the store, while being pushed by a customer who is not using the tablet terminal 14a, or in a timeout state which may occur if the tablet terminal 14a does not receive any input operation over a predetermined, relatively long period.

The connected device detection part 56 detects the devices 30 that are connected to the tablet terminal 14a.

The battery connection switching part 58 selects the connection configuration for the battery unit 40 to be adopted based on the status of the batteries 40 presently connected to the devices 30. Furthermore, the battery connection switching part 58 switches the connection(s) between the batteries 40 and the devices 30 to reflect the selected connection configuration.

The battery connection switching part 58 preferably switches the connections of the battery unit 40 when the tablet terminal 14a is in a standby state. This is because, if the battery 40 connected to a device 30 with high power consumption is switched while this device 30 is being operated, a load will be imposed on the auxiliary battery 25 and thus the operation of the device 30 may be unstable. Note that, when the battery voltage determination part 52 determines that the output voltage e of a battery 40 reaches, or drops below, the voltage threshold eₜₕ, the tablet terminal 14a and the connected device 30 do not immediately stop operation. Accordingly, it may be better for the connection of a battery 40 to be switched after the tablet terminal 14a completes execution of present processing and enters a standby state, so the operation of the tablet terminal 14a will not be hindered.

The power supply part 60 supplies power from one battery of the plurality of batteries 40a, 40b, ... 40n to a device 30.

The operation control part 62 controls the overall operations of the tablet terminal 14a.

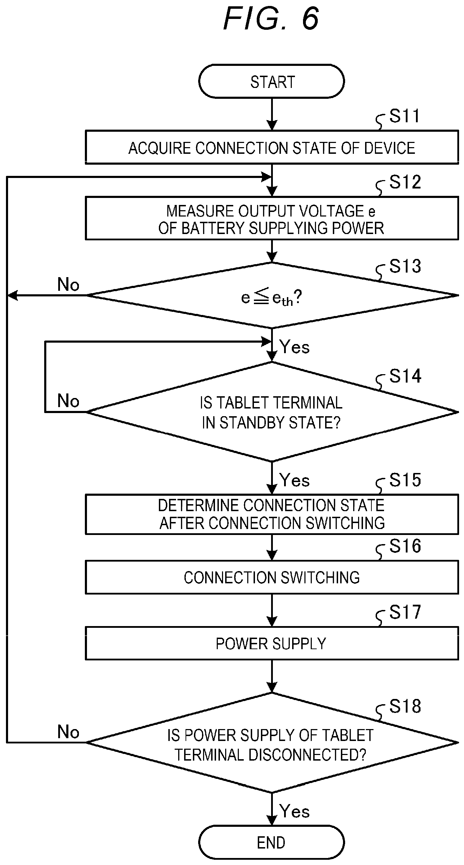

(Description of Process by Tablet Terminal) FIG. 6 is a flowchart showing an example of a battery switching process by the tablet terminal 14a.

The connected device detection part 56 detects the device(s) 30 presently connected to the tablet terminal 14a (Act S11).

The battery voltage detection part 50 detects the output voltages e of all batteries 40 that are presently supplying power to the tablet terminal 14a and the devices 30 (Act S12). The batteries 40 that are presently supplying power may be referred to as "connected." In some examples, output voltages e for all of the batteries 40, including those not presently supplying power may be detected. The batteries 40 not presently supplying power may be referred to as "unconnected."

The battery voltage determination part 52 determines whether the output voltage e of any battery 40 acquired by the battery voltage detection part 50 is equal to or lower than the voltage threshold eₜₕ (Act S13). If the output voltage e of a battery 40 is equal to or lower than the voltage threshold eₜₕ (Act S13: Yes), the process moves to Act S14. On the other hand, if the output voltage e of a battery 40 is not equal to or lower than the voltage threshold eₜₕ (Act S13: No), the process returns to Act S12.

If Yes is determined at Act S13, the operating state acquisition part 54 acquires the operating state of the tablet terminal 14a and determines whether the tablet terminal 14a is presently in the standby state (Act S14). If the tablet terminal 14a is in the standby state (Act S14: Yes), the process moves to Act S15. On the other hand, if the tablet terminal 14a is not in the standby state (Act S14: No), the process repeats the determination at Act S14.

If Yes is determined at Act S14, the battery connection switching part 58 selects the connection configuration for the batteries 40 and the devices 30 to be adopted (Act S15). Specifically, the battery connection switching part 58 selects one of the batteries 40 with an output voltage e higher than the voltage threshold eₜₕ from among the unconnected batteries 40. Then, the particular device 30 to which power is to be supplied from the selected one of the batteries 40 is set.

Subsequently, the battery connection switching part 58 switches the connection(s) between the batteries 40 and the devices 30 to reflect the connection state set at Act S15 (Act S16).

The power supply part 60 now supplies power to the tablet terminal 14a and the devices 30 from the newly connected batteries 40 (Act S17).

The operation control part 62 determines whether the power supply to the tablet terminal 14a has been disconnected (Act S18). If the power supply to the tablet terminal 14a is disconnected (Act S18: Yes), the tablet terminal 14a ends the process in FIG. 6. On the other hand, if the power supply to the tablet terminal 14a is not disconnected (Act S18: No), the process returns to Act S12.

Note that, in the present embodiment, a tablet terminal 14a which can be used for performing the registration of merchandise being purchased by a customer is explained, however, the tablet terminal 14a may also perform a settlement process (accept payments and the like) for the registered merchandise.

As described above, in the tablet terminal 14a of the first embodiment, the battery connection switching part 58 switches the batteries 40 based on the status of the batteries 40 presently connected to the devices 30. Therefore, when the remaining power of the connected battery is low during power supply, the connected battery may be automatically switched at some appropriate time thereafter.

In the tablet terminal 14a of the first embodiment, the battery connection switching part 58 switches the batteries 40 if the output voltage e of a connected battery 40 is less than the voltage threshold eₜₕ.

Furthermore, in the tablet terminal 14a of the first embodiment, the battery connection switching part 58 selects the connection arrangement for the batteries 40 and the devices 30 such that power may be supplied from a different battery 40 for each device 30 or power may be supplied from the one battery 40 to a plurality of devices 30 based on the known or expected power consumption of the connected devices 30. Therefore, an appropriate connection configuration of the battery 40 may be determined according to the state of the connected device(s) 30.

Moreover, in the tablet terminal 14a of the first embodiment, the battery connection switching part 58 performs connection switching of the batteries 40 based on the present operating state of the tablet terminal 14a. Therefore, battery connection switching may wait until the standby state of the tablet terminal 14a. Thereby, for example, when a device 30 having high power consumption is connected, the load on the auxiliary battery 25 during connection switching may be reduced by waiting until such a device is not in active use.

### (Second Embodiment)

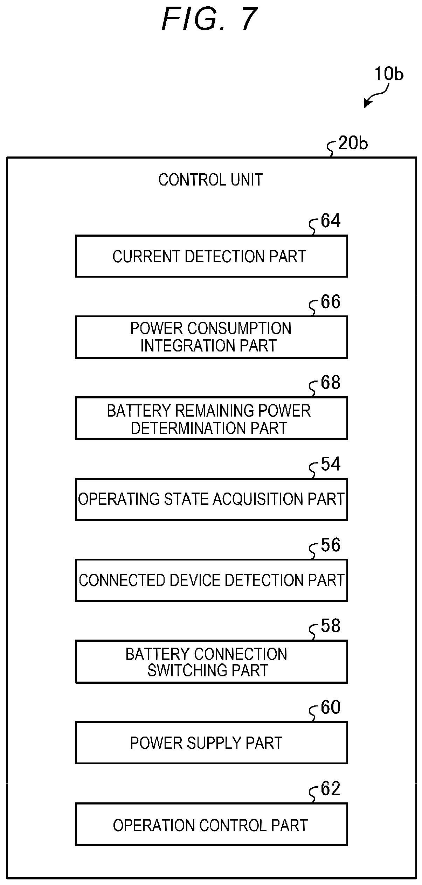

Next, a cart POS 10b (see FIG. 7) as a second embodiment will be explained. The cart POS 10b of the second embodiment is similar to cart POS 10a (see FIG. 1) and includes a tablet terminal similar to the tablet terminal 14a of the cart POS 10a. The overall appearance and construction of the cart POS 10b of the second embodiment can be the same as that of the cart POS 10a.

The tablet terminal of the second embodiment has the same functions as the tablet terminal 14a described for the first embodiment, but the determination of the remaining power of the batteries 40 is different.

The hardware configuration of the tablet terminal of the second embodiment is substantially equal to the hardware configuration of the tablet terminal 14a (see FIG. 2). The control program executed by control unit 20b in the second embodiment differs in this regard from the control program P1 executed by the control unit 20a of the tablet terminal 14a of the first embodiment.

(Functional Configuration of Tablet Terminal) FIG. 7 is a block diagram showing an example of the functional configuration of the control unit 20b of the second embodiment when executing the relevant control program of the second embodiment.

The control unit 20b loads and executes the relevant control program in RAM, and thereby, realizes the described functions of a current detection part 64, a power consumption integration part 66, a battery remaining power determination part 68, an operating state acquisition part 54, a connected device detection part 56, a battery connection switching part 58, a power supply part 60, and an operation control part 62, as depicted in FIG. 7.

The current detection part 64 detects a current flowing in the batteries 40 supplying power to a device 30. Specifically, the current detection part 64 detects a current "i" flowing in an output end of the battery selector 27a.

The power consumption integration part 66 calculates an integration value for power consumption "P" from the battery 40 supplying power to the device 30. Specifically, the power consumption integration part 66 integrates the power consumption P for a device 30 calculated based on the current i detected by the current detection part 64.

For example, when the battery 40 is connected to a device 30 having a resistance value "r", the power consumption P for the device 30 is calculated using an expression (1):$P = {\int }_{t} {i}^{2} rdt$

The battery remaining power determination part 68 determines whether the remaining power in the battery 40 as calculated based on an initial capacity "C" of the battery 40 and the power consumption P of the battery 40 (as integrated by the power consumption integration part 66) as a difference value (C - P) is lower than a predetermined remaining power threshold Cₜₕ. The initial capacity C of the battery 40 refers to the capacity of the fully charged battery 40. The initial capacities C of the respective individual batteries 40 and the integrated value of the power consumption P calculated using the expression (1) for each battery 40 are stored in the battery status monitoring file B. Note that, when an individual battery 40 is fully charged, the integrated value of the power consumption P of the battery 40 stored in the battery status monitoring file B is reset to zero.

The functions of the operating state acquisition part 54, the connected device detection part 56, the battery connection switching part 58, the power supply part 60, and the operation control part 62 are the same as the functions of the respective parts of the tablet terminal 14a and additional explanation thereof will be omitted.

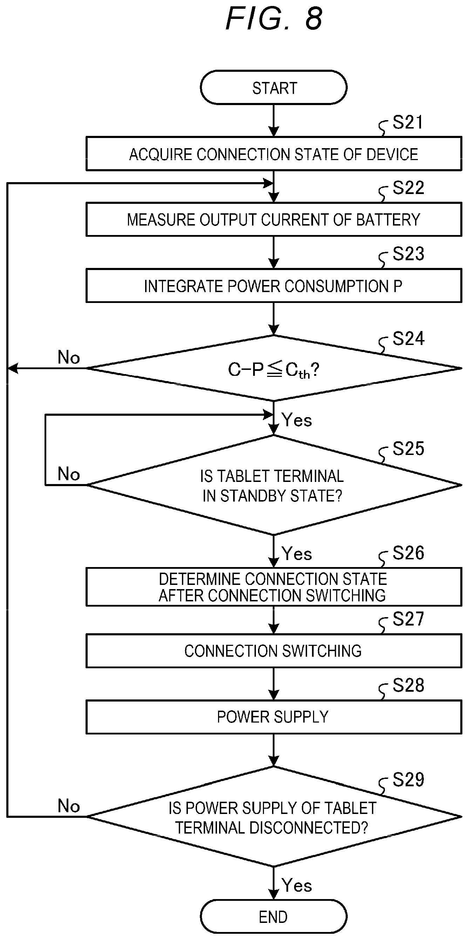

(Processing by Tablet Terminal) Next, a flow of a process by the control unit 20b will be explained using FIG. 8. FIG. 8 is a flowchart showing an example of the flow of a battery switching process performed by a tablet terminal in the second embodiment.

The connected device detection part 56 detects a device 30 has been connected to the tablet terminal of the second embodiment(Act S21).

The current detection part 64 detects the current flowing in the battery unit 40 supplying power to a device 30 (Act S22).

The power consumption integration part 66 calculates the integration value of the power consumption P of the batteries 40 supplying power to a device 30 (Act S23). Specifically, the power consumption integration part 66 calculates the integration value of the power consumption P using the expression (1).

The battery remaining power determination part 68 determines whether or not the difference value (C - P) obtained by subtraction of the integrated power consumption P value (obtained from the power consumption integration part 66) from the initial capacity C of the battery 40 is equal to or lower than the remaining power threshold Cₜₕ (Act S24). If the difference value (C - P) is equal to or less than the remaining power threshold Cₜₕ (Act S24: Yes), the process moves to Act S25. On the other hand, if the difference value (C - P) is not equal to or lower than the remaining power threshold Cₜₕ(Act S24: No), the process returns to Act S22.

If Yes is determined at Act S24, the operating state acquisition part 54 acquires the operating state of the tablet terminal of the second embodiment, and acquires an indication of whether or not the tablet terminal is in the standby state (Act S25). If the tablet terminal is in the standby state (Act S25: Yes), the process moves to Act S26. On the other hand, if the tablet terminal 14b is not in the standby state (Act S25: No), the process repeats the determination at Act S25.

If Yes is determined at Act S25, the battery connection switching part 58 next determines what the connection configuration between the battery 40 and the device 30 after connection switching should be (Act S26). Specifically, the battery connection switching part 58 selects a battery 40 having a full capacity C or the like from among the presently unconnected batteries 40. Then, the device 30 to which power is to be supplied from the selected battery 40 is determined.

Then, the battery connection switching part 58 then switches the connection between the batteries 40 and the device 30 to reflect the previously determined (in Act S26) connection state (Act S27).

The power supply part 60 now supplies power to the tablet terminal and a device 30 from the newly connected battery 40 (Act S28).

The operation control part 62 then determines whether the power supply to the tablet terminal has been disconnected (Act S29). If the disconnection of the power supply to the tablet terminal has occurred (Act S29: Yes), the tablet terminal ends the process in FIG. 8. On the other hand, if the disconnection of the power supply to the tablet terminal 14b has not occurred (Act S29: No), the process returns to Act S22.

As described above, in the tablet terminal of the second embodiment, the battery connection switching part 58 switches a battery 40 that supplies power to a device 30 when the remaining power of the battery 40 (calculated based on the initial capacity C of the battery 40 and the cumulative (integrated) power consumption P from the start of power supply by the battery 40) is lower than the remaining power threshold Cₜₕ. Therefore, the time to switch the battery may be accurately determined.

### (Third Embodiment)

A cart POS 10c of the third embodiment has substantially the same functions as the cart POS 10a of the first embodiment. The cart POS 10c is an example of a merchandise sales information processing apparatus.

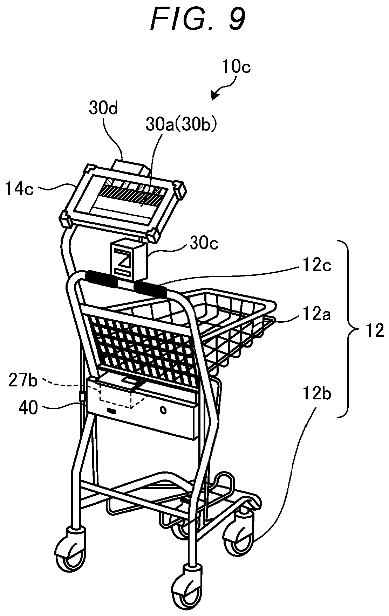

FIG. 9 is a schematic perspective view of the cart POS 10c of the third embodiment. The cart POS 10c is different from the cart POS 10a in that a battery selector 27b is provided outside of a tablet terminal 14c. The battery selector 27b may be provided inside of the same housing as that of the battery unit 40. Note that the battery selector 27b and the battery 40 may be separately provided in other examples.

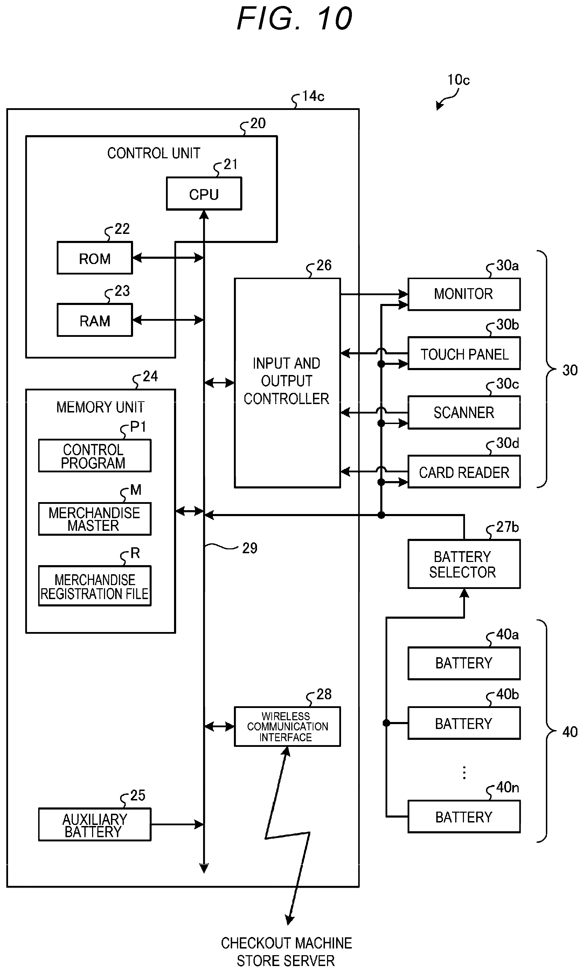

(Configuration of Cart POS 10c). FIG. 10 is a block diagram showing an example of the configuration of the cart POS 10c.

The cart POS 10c does not require the battery status monitoring file B and the connected device management file D in the memory unit 24 provided in the cart POS 10a (see FIG. 2). Furthermore, the cart POS 10c has the battery selector 27b separate from the tablet terminal 14c.

(Connection Switching Method of Battery) The battery selector 27b of the cart POS 10c performs settings of connection between a plurality of input terminals and a plurality of output terminals and connection switching using switching operations of field-effect transistors (FETs) or the like. More specifically, the battery selector 27b monitors the output voltage of the batteries 40 connected to the input terminal. Then, if the output voltage "e" is determined as being equal to or lower than the voltage threshold eₜₕ, the connection is switched to another one of the batteries 40. The output terminal of the battery selector 27b is connected to the tablet terminal 14c and a device 30 operating with the tablet terminal 14c. The battery selector 27b itself operates by power supply from a battery 40.

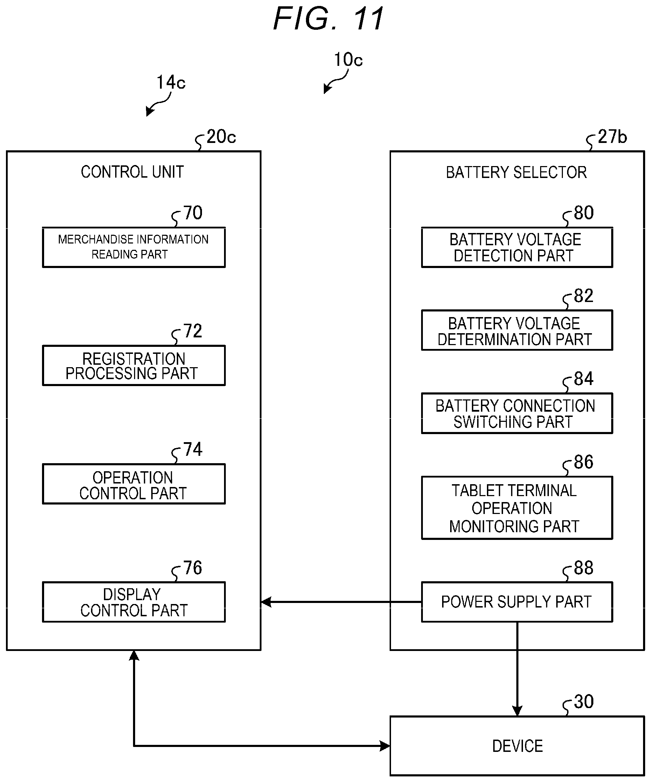

(Functional Configuration of Cart POS 10c)FIG. 11 is a block diagram showing an example of the functional configuration of the cart POS 10c.

The cart POS 10c operates by cooperation of a control unit 20c of the tablet terminal 14c, the battery selector 27b, and the device(s) 30 with one another.

The control unit 20c realizes a merchandise information reading part 70, a registration processing part 72, an operation control part 74, and a display control part 76 by execution of a control program or the like.

The merchandise information reading part 70 reads a code symbol, such as a barcode attached to merchandise, in conjunction with the scanner 30c. Then, the merchandise information reading part 70 decodes the code symbol and checks the decoded contents against the merchandise codes (product codes) registered in the merchandise master M, and thereby identifies the item of merchandise corresponding to the code symbol.

The registration processing part 72 registers the merchandise identified by the merchandise information reading part 70 in the merchandise registration file R.

The operation control part 74 acquires input operation information when input operations are performed by a customer on the touch panel 30b.

The display control part 76 generates display data to be output to the monitor 30a. Further, the display control part 76 outputs the generated display data to the monitor 30a.

The battery selector 27b provides a battery voltage detection part 80, a battery voltage determination part 82, a battery connection switching part 84, a tablet terminal operation monitoring part 86, and a power supply part 88.

The battery voltage detection part 80 detects the output voltage e of the batteries 40 connected to the tablet terminal 14c and a device 30. Note that the battery voltage detection part 80 may further detect the output voltage e of the batteries 40 not presently connected to the tablet terminal 14c or a device 30.

The battery voltage determination part 82 determines whether the output voltage e of the battery 40 acquired by the battery voltage detection part 80 is equal to or less than the voltage threshold eₜₕ.

The battery connection switching part 84 determines what the connection configuration of the batteries 40 should be after the connection switching based on the output voltage e of the batteries 40 connected to the device 30. Furthermore, the battery connection switching part 84 also switches the connection(s) between the batteries 40 and the device(s) 30 to the previously determined connection configuration. The battery connection switching part 84 is an example of the connection switching part.

The tablet terminal operation monitoring part 86 monitors the operating state of the tablet terminal 14c. More specifically, the tablet terminal operation monitoring part 86 monitors whether or not the power supply of the tablet terminal 14c is presently disconnected.

The power supply part 88 then supplies power from the batteries 40 connected to the tablet terminal 14c and the device(s) 30.

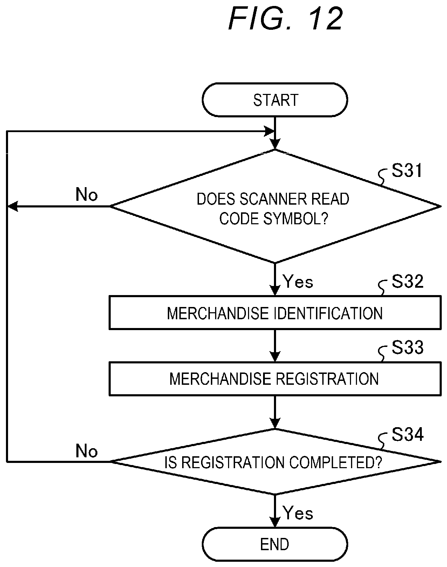

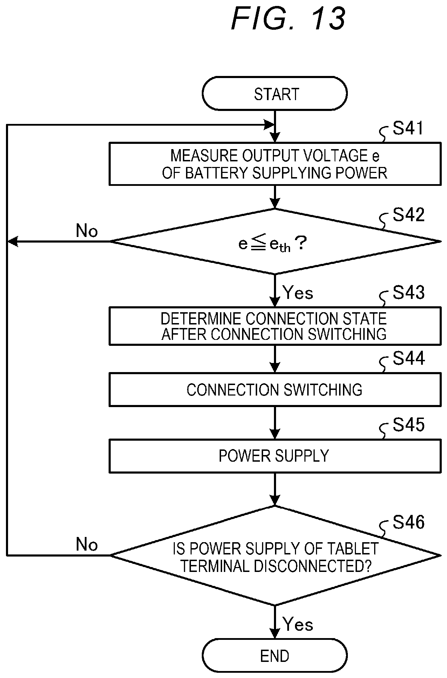

(Processes by Cart POS 10c) FIG. 12 is a flowchart showing an example of the flow of a merchandise registration process by a tablet terminal 14c of the third embodiment. FIG. 13 is a flowchart showing an example of the flow of a battery switching process by a battery selector 27b of the third embodiment.

First, the flow of a merchandise registration process by the tablet terminal 14c is explained.

The merchandise information reading part 70 determines whether the scanner 30c has read a code symbol (such as a barcode) attached to an item of merchandise (Act S31). If a code symbol has been read (Act S31: Yes), the process moves to Act S32. On the other hand, if a code symbol has not been read (Act S31: No), the process repeats Act S31.

If Yes is determined at Act S31, the merchandise information reading part 70 identifies the item of merchandise (Act S32) according to the code symbol.

The registration processing part 72 registers the merchandise identified at Act S32 in the merchandise registration file R (Act S33).

The operation control part 74 determines whether merchandise registration has been completed (Act S34). If merchandise registration has been completed (Act S34: Yes), the tablet terminal 14c ends the process in FIG. 12. On the other hand, if registrations of merchandise is not yet completed (Act S34: No), the process returns to Act S31. In general, whether or not merchandise registration has been completed can be determined based on whether the customer has pressed a button or key on touch panel 30b for instructing registration completion such as a subtotal button or a registration completion button that is displayed on the monitor 30a of the tablet terminal 14c.

Next, the flow of the battery switching process by the battery selector 27b is explained.

The battery voltage detection part 80 detects the output voltages e of all batteries 40 supplying power to the tablet terminal 14c and the device 30 (Act S41).

The battery voltage determination part 82 determines whether or not the output voltage e of the particular battery or batteries 40 supplying power to the tablet terminal 14c and the device 30 as acquired by the battery voltage detection part 80 is equal to or less than the voltage threshold eₜₕ (Act S42). If the output voltage e of a battery 40 is equal to or less than the voltage threshold eₜₕ (Act S42: Yes), the process moves to Act S43. On the other hand, if the output voltage e of the battery 40 is not equal to or less than the voltage threshold eₜₕ (Act S42: No), the process returns to Act S41.

If Yes is determined at Act S42, the battery connection switching part 84 determines what the connection configuration between the batteries 40 and the device(s) 30 should be after connection switching (Act S43).

The battery connection switching part 84 then switches the connections between the batteries 40 and the device(s) 30 to the previously determined (in Act S43) connection configuration (Act S44).

The power supply part 88 then supplies power to the tablet terminal 14c and the device(s) 30 from the newly connected batteries 40 (Act S45).

The tablet terminal operation monitoring part 86 monitors whether or not the power supply to the tablet terminal 14c is presently disconnected (Act S46). If the power supply to the tablet terminal 14c is disconnected (Act S46: Yes), the battery selector 27b ends the process in FIG. 13. On the other hand, if the power supply to the tablet terminal 14c is not disconnected (Act S46: No), the process returns to ACT S41.

In the third embodiment, a tablet terminal 14c performing a registration process of merchandise being purchased by the customer is explained, however, the tablet terminal 14c may further perform a settlement process to settle payment for the registered merchandise after the registration process is completed.

As described above, the cart POS 10c is a merchandise sales data processing apparatus. The battery connection switching part 84 (switches the batteries 40 that supply power to the tablet terminal 14c and the device(s) 30 based on a battery status determined based on the output voltage e of the batteries 40. Then, the power supply part 88 supplies power from a new one of the batteries 40 to the tablet terminal 14c and the device(s) 30 when required. The control unit 20c performs at least a registration process of the merchandise to be purchased by the customer based on the information input from a device 30. Therefore, when the remaining power of the battery 40 is low during use, the connection switching of the batteries 40 may be automatically performed.

## Claims

1. An information processing apparatus, comprising:
a non-volatile memory storing a connected device management file; and
a controller configured to:
cause power from a battery of a plurality of batteries to be supplied to a component device;
control a battery selector to switch which battery of the plurality of batteries is connected to the component device based on a status of the present battery connected to the component device; and
store a list of a plurality of devices operated and being supplied with power in the connected device management file and the power consumption of each device;
the status of the present battery is a remaining power level calculated based on an initial capacity of the present battery and a cumulative power consumption from a start of power supply to the component device from the present battery, and
the controller controls the battery selector to switch to another battery in the plurality of batteries when the remaining power level is less than a remaining power threshold value;
the controller being further configured to control the battery selector to connect multiple batteries of the plurality of batteries to the component device based on the consumption of the component device.

2. The information processing apparatus according to claim 1, wherein
the information processing apparatus is connected to a plurality of component devices, each component device being configured to receive power from at least one of the plurality of batteries.

3. The information processing apparatus according to claim 2, wherein the controller is
further configured to select between whether power is supplied from a single battery to the plurality of component devices or from a single battery to only one component device based on respective power consumption levels of the plurality of component devices.

4. The information processing apparatus according to any one of claims 1 to 3, wherein
the component device is one of a display screen, a touch panel, a commodity scanner, and a credit card reader.

5. The information processing apparatus according to any one of claims 1 to 4, further
comprising an auxiliary battery configured to provide power to the component device when none of the plurality of batteries is connected to the component device.

6. The information processing apparatus according to any one of claims 1 to 5, wherein
the controller is further configured to perform a merchandise registration process based on inputs from the component device.

7. The information processing apparatus according to any one of claims 1 to 6, further
comprising the battery selector.

8. The information processing apparatus according to any one of claims 1 to 6, wherein
the battery selector is provided outside of and connected to the information processing apparatus.

9. A cart-based point-of-sale terminal, comprising:
a shopping cart;
a power supply unit including a plurality of batteries mounted on the shopping cart;
the information processing apparatus according to any one of claims 1 to 8, mounted on the shopping cart and connected to the power supply unit;
a plurality of component devices on the shopping cart and connected to the information processing apparatus, the plurality of component devices including:
a display screen configured to display information to a user of the shopping cart,
a merchandise scanner configured to acquire information from merchandise to be purchased by the user, and
a touch panel integrated with the display screen and configured to receive input operations from the user; and
a battery selector connected to the plurality of batteries.

## Patentansprüche

1. Informationsverarbeitungsgerät, umfassend:
einen nichtflüchtigen Speicher, der eine Datei zur Verwaltung verbundener Vorrichtungen speichert; und
eine Steuerung, die zu Folgendem konfiguriert ist:
Veranlassen, dass Strom aus einer Batterie einer Vielzahl von Batterien zu einer Komponentenvorrichtung zugeführt wird;
Steuern eines Batterie-Wählschalters, um umzuschalten, welche Batterie der Vielzahl von Batterien mit der Komponentenvorrichtung verbunden ist, basierend auf einem Status der derzeit mit der Komponentenvorrichtung verbundenen Batterie; und
Speichern einer Liste einer Vielzahl von betriebenen und mit Strom versorgten Vorrichtungen und den Stromverbrauch jeder Vorrichtung in der Datei zur Verwaltung verbundener Vorrichtungen;
wobei der Status der derzeitigen Batterie ein verbleibender Leistungspegel ist, der basierend auf einer Anfangskapazität der derzeitigen Batterie und einem kumulierten Stromverbrauch ab Beginn der Stromversorgung der Komponentenvorrichtung durch die derzeitige Batterie berechnet wird, und
wobei die Steuerung den Batterie-Wählschalter steuert, um auf eine andere Batterie der Vielzahl von Batterien umzuschalten, wenn der verbleibende Leistungspegel unter einem Schwellenwert für den verbleibenden Leistungspegel ist;
wobei die Steuerung ferner konfiguriert ist, um den Batterie-Wählschalter zu steuern, um mehrere Batterien der Vielzahl von Batterien mit der Komponentenvorrichtung zu verbinden, basierend auf dem Verbrauch der Komponentenvorrichtung.

2. Informationsverarbeitungsgerät nach Anspruch 1, wobei das Informationsverarbeitungsgerät mit einer Vielzahl von Komponentenvorrichtungen verbunden ist, wobei jede Komponentenvorrichtung konfiguriert ist, um Strom von mindestens einer der Vielzahl von Batterien zu erhalten.

3. Informationsverarbeitungsgerät nach Anspruch 2, wobei die Steuerung ferner konfiguriert ist, um auszuwählen, ob Strom aus einer einzelnen Batterie zu der Vielzahl von Komponentenvorrichtungen oder aus einer einzelnen Batterie nur zu einer Komponentenvorrichtung zugeführt wird, basierend auf den jeweiligen Stromverbrauchswerten der Vielzahl von Komponentenvorrichtungen.

4. Informationsverarbeitungsgerät nach einem der Ansprüche 1 bis 3, wobei die Komponentenvorrichtung eines von einem Anzeigebildschirm, einem Touchpanel, einem Warenscanner und einem Kreditkartenleser ist.

5. Informationsverarbeitungsgerät nach einem der Ansprüche 1 bis 4, ferner umfassend eine Hilfsbatterie, die konfiguriert ist, um Strom zu der Komponentenvorrichtung zuzuführen, wenn keine der Vielzahl von Batterien mit der Komponentenvorrichtung verbunden ist.

6. Informationsverarbeitungsgerät nach einem der Ansprüche 1 bis 5, wobei die Steuerung ferner konfiguriert ist, um einen Warenregistrierungsprozess basierend auf Eingängen von der Komponentenvorrichtung durchzuführen.

7. Informationsverarbeitungsgerät nach einem der Ansprüche 1 bis 6, ferner umfassend den Batterie-Wählschalter.

8. Informationsverarbeitungsgerät nach einem der Ansprüche 1 bis 6, wobei der Batterie-Wählschalter außerhalb des Informationsverarbeitungsgeräts bereitgestellt und damit verbunden ist.

9. Wagenbasiertes Verkaufspunkt-Endgerät, umfassend:
einen Einkaufswagen;
eine Energieversorgungseinheit, die eine Vielzahl von Batterien beinhaltet, die an dem Einkaufswagen montiert sind;
das Informationsverarbeitungsgerät nach einem der Ansprüche 1 bis 8, die an dem Einkaufswagen montiert und mit der Energieversorgungseinheit verbunden ist;
eine Vielzahl von Komponentenvorrichtungen an dem Einkaufswagen, die mit dem Informationsverarbeitungsgerät verbunden sind, wobei die Vielzahl von Komponentenvorrichtungen Folgendes beinhaltet:
einen Anzeigebildschirm, der konfiguriert ist, um Informationen für einen Benutzer des Einkaufswagens anzuzeigen,
einen Warenscanner, der konfiguriert ist, um Informationen von Waren zu erfassen, die von dem Benutzer gekauft werden sollen, und
ein mit dem Anzeigebildschirm integriertes Touchpanel, das konfiguriert ist, um Eingabevorgänge von dem Benutzer zu empfangen; und
einen mit der Vielzahl von Batterien verbundenen Batterie-Wählschalter.

## Revendications

1. Appareil de traitement d'informations, comprenant :
une mémoire non volatile stockant un fichier de gestion de dispositifs connectés ; et
un contrôleur configuré pour :
amener l'alimentation provenant d'une batterie parmi une pluralité de batteries à être fournie à un dispositif constitutif ;
commander à un sélecteur de batteries de commuter quelle batterie parmi la pluralité de batteries est connectée au dispositif constitutif en fonction d'un état de la batterie actuelle connectée au dispositif constitutif; et
stocker une liste d'une pluralité de dispositifs fonctionnant et étant alimentés en énergie dans le fichier de gestion de dispositifs connectés, ainsi que la consommation d'énergie de chaque dispositif;
l'état de la batterie actuelle étant un niveau d'énergie restante calculé sur la base d'une capacité initiale de la batterie actuelle et d'une consommation d'énergie cumulative depuis le début de l'alimentation du dispositif constitutif par la batterie actuelle, et
le contrôleur commandant au sélecteur de batteries de commuter vers une autre batterie parmi la pluralité de batteries lorsque le niveau d'énergie restante est inférieur à une valeur seuil de niveau d'énergie restante ;
le contrôleur étant en outre configuré pour commander au sélecteur de batteries de connecter plusieurs batteries parmi la pluralité de batteries au dispositif constitutif en fonction de la consommation du dispositif constitutif.

2. Appareil de traitement d'informations selon la revendication 1, dans lequel l'appareil de traitement d'informations est connecté à une pluralité de dispositifs constitutifs, chaque dispositif constitutif étant configuré pour recevoir de l'énergie en provenance d'au moins une batterie parmi la pluralité de batteries.

3. Appareil de traitement d'informations selon la revendication 2, dans lequel le contrôleur est en outre configuré pour sélectionner si l'alimentation est fournie à partir d'une seule batterie à la pluralité de dispositifs constitutifs, ou à partir d'une seule batterie à un seul dispositif constitutif, en fonction des niveaux de consommation d'énergie respectifs de la pluralité de dispositifs constitutifs.

4. Appareil de traitement d'informations selon l'une quelconque des revendications 1 à 3, dans lequel le dispositif constitutif est l'un parmi un écran d'affichage, un panneau tactile, un lecteur de code-barres de marchandises et un lecteur de carte de crédit.

5. Appareil de traitement d'informations selon l'une quelconque des revendications 1 à 4, comprenant en outre une batterie auxiliaire configurée pour fournir de l'énergie au dispositif constitutif lorsqu'aucune batterie parmi la pluralité de batteries n'est connectée au dispositif constitutif.

6. Appareil de traitement d'informations selon l'une quelconque des revendications 1 à 5, dans lequel le contrôleur est en outre configuré pour exécuter un processus d'enregistrement de marchandises sur la base d'entrées provenant du dispositif constitutif.

7. Appareil de traitement d'informations selon l'une quelconque des revendications 1 à 6, comprenant en outre le sélecteur de batteries.

8. Appareil de traitement d'informations selon l'une quelconque des revendications 1 à 6, dans lequel le sélecteur de batteries est disposé à l'extérieur de l'appareil de traitement d'informations et connecté à celui-ci.

9. Terminal de point de vente sur chariot, comprenant :
un chariot de courses ;
une unité d'alimentation comprenant une pluralité de batteries montées sur le chariot de courses ;
l'appareil de traitement d'informations selon l'une quelconque des revendications 1 à 8, monté sur le chariot de courses et connecté à l'unité d'alimentation ;
une pluralité de dispositifs constitutifs sur le chariot de courses, connectés à l'appareil de traitement d'informations, la pluralité de dispositifs constitutifs comprenant :
un écran d'affichage configuré pour afficher des informations à un utilisateur du chariot de courses,
un lecteur de code-barres de marchandises configuré pour acquérir des informations à partir de marchandises devant être achetées par l'utilisateur, et
un panneau tactile intégré à l'écran d'affichage, configuré pour recevoir des opérations d'entrée de la part de l'utilisateur ; et
un sélecteur de batteries connecté à la pluralité de batteries.
